Europäisches Patentamt

European Patent Office

Office européen des brevets

(19)

(11)   **EP 0 982 116 A2**

(12)   **EUROPÄISCHE PATENTANMELDUNG**

(43) Veröffentlichungstag:
01.03.2000 Patentblatt 2000/09

(51) Int. Cl.⁷: **B29C 55/16**, B29C 55/12
// C08J5/18, B29D7/01

(21) Anmeldenummer: 99115657.1

(22) Anmeldetag: 07.08.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.08.1998 DE 19839007**

(71) Anmelder:
**Mitsubishi Polyester Film GmbH**
**65203 Wiesbaden (DE)**

(72) Erfinder:
• **Kliesch, Holger**
  **55252 Mainz (DE)**

• Hilkert, Gottfried
  55291 Saulheim (DE)
• Kurz, Rainer
  65307 Hettenheim (DE)
• Hora, Franz
  65830 Kriftel (DE)
• Bursch, Annegrete
  65385 Rüdesheim (DE)

(74) Vertreter:
**Schweitzer, Klaus, Dr. et al**
**Patentanwaltskanzlei Zounek,**
**Industriepark Kalle-Albert,**
**Rheingaustrasse 190-196**
**65203 Wiesbaden (DE)**

(54)   **Verfahren zur Herstellung von biaxial orientierten PET-Folien und Verwendung derselben für Folienkondensatoren in der SMD-Technik**

(57)   Die Erfindung beschreibt ein Verfahren zur Herstellung einer biaxial orientierten Folie mit einer Dicke von < 10 μm, wobei eine Polymerschmelze durch den Spalt und Extrusionsdüse auf eine Kühlwalze extrudiert, in Längs- und Querrichtung gestreckt und in Längsrichtung um > 0.1 % und Querrichtung um > 3 % relaxiert wird, wobei die Folie während der Längs- und Querrelaxation an den Rändern gehalten wird und die Folie aufgewickelt wird.

EP 0 982 116 A2

Printed by Xerox (UK) Business Services
2.16.7/3.6

**Beschreibung**

Die vorliegende Erfindung betrifft ein Verfahren zur Herstellung von Polyesterfolien, insbesondere PET-Folien, die sich aufgrund ihrer Schrumpfeigenschaften besonders zur Herstellung von Kondensatoren für die SMD-Technik eignen. Insbesondere für Kondensatoren, die in der SMD-Technik verwendet werden, benötigt man Folien mit geringer Dicke und Temperaturbeständigkeit bei den beim Löten auftretenden Temperaturen. Dies bringt Vorteile bei der Raumnutzung des Kondensators und beim Lötvorgang.

Zur Zeit werden für Folienkondensatoren in der SMD-Technik PEN- und PPS-Folien eingesetzt. PEN- und PPS-Folien haben einen deutlich höheren Schmelzpunkt als PET-Folien (ca. 255 °C). Der Schmelzpunkt von PEN liegt bei ca. 265 °C und der von PPS bei ca. 285 °C. Von entscheidendem Nachteil sind jedoch die hohen Kosten solcher PEN- und PPS-Folien.

Bereits seit mehreren Jahren geht der Trend in der Elektronikindustrie aus Kostengründen weg von bedrahteten Bauelementen hin zu SMD-fähigen Bauteilen. Dies gilt auch für den Kondensatorbereich. Hier wird der Markt zu einem sehr hohen Prozentsatz von SMD-Keramik-Kondensatoren bedient, da Kondensatoren aus anderen Materialien die während des SMD-Lötprozesses auftretenden Temperaturen (bei dem gebräuchlichen Reflow-Löten liegen die Peaktemperaturen typischerweise über 225 °C) nicht unbeschadet überstehen. Dies gilt insbesondere für Folienkondensatoren. So liegen die oben erwähnten Peak-Temperaturen in dem Bereich, in dem PET, eines der klassischen Polymere für Folienkondensatoren, zu schmelzen beginnt. Daher haben sich Kondensator- und Folienhersteller in den vergangenen Jahren auf Polymere mit höheren Schmelzpunkten wie PEN und PPS konzentriert. Oder es wurden aus PET hergestellte SMD-Folienkondensatoren verwendet, die durch ein zusätzliches Gehäuse vor dem Temperaturerlebnis geschützt werden, bzw. PET SMD-Kondensatoren, bei denen die Peaktemperaturen auf Werte knapp über 200 °C limitiert wurden, was ihre Verwendbarkeit deutlich einschränkt. Wie in **WO 98/13414** und **WO 98/13415** beschrieben, konnte überraschenderweise gezeigt werden, daß SMD-Kondensatoren ohne die zuvor genannten Einschränkungen aus PET-Folien hergestellt werden können, die sich besonders durch einen niedrigen Querschrumpf auszeichnen. Hier hatte sich gezeigt, daß im Gegensatz zum Querschrumpf in Längsrichtung noch ein deutlicher Schrumpf vorhanden sein muß, um die notwendige Verfestigung für den Erhalt funktionsfähiger Kondensatoren zu gewährleisten.

Es hat sich nun unerwartet herausgestellt, daß entgegen den Erkenntnissen aus **WO 98/13414** und **WO 98/13415** auch aus Folien mit nur noch minimalem Längsschrumpf funktionsfähige SMD-Kondensatoren hergestellt werden können. Generell sind Folien mit besonders niedrigen Schrumpfwerten besonders für SMD-Kondensatoren geeignet, da sie einen besonders niedrigen Kapazitätsverlust während des Lötens zeigen.

Bekannt ist, daß gemäß **EP-A- 0 402 861** eine 75 μm Folie mit. niedrigen Schrumpfwerten in Maschinenrichtung (MD) und Querrichtung (TD) produziert werden kann, indem man die Folie in der Fixierung in Querrichtung relaxiert und darüber hinaus eine Relaxation in Längsrichtung zuläßt. Diese letztgenannte Relaxation in Längsrichtung ist nach **EP-A-0 402 861** offenbar nur dann möglich, wenn die Folie nach dem Verlassen des Fixierrahmens mit einer geringeren Geschwindigkeit als der Geschwindigkeit im Rahmen aufgewickelt wird. Dies ist für die dort beschriebenen relativ dicken Folien (75 μm) durchführbar, verbietet sich aber bei Foliendicken < 10 μm, da bei der ungehaltenen Relaxation zwischen Rahmen und Aufrollung unkontrollierte Dimensionsänderungen auftreten, die zu einer für Kondensatorfolien inakzeptablen Profilgleichmäßigkeit (Dickenabweichung in MD und TD) führen.

Verfahren wie beispielsweise in **US-A-4,042,569** beschrieben, bei denen die Längs/Quer gestreckte Folie danach in-line oder off-line zwischen Walzen in MD relaxiert wird, führen zu Folien mit niedrigen Schrumpfwerten, aber auch zu den oben bereits beschriebenen Schwierigkeiten und sind außerdem aufgrund der zusätzlichen Prozeßschritte und der verringerten Prozeßsicherheit absolut unwirtschaftlich.

In **WO 88/10188** ist eine Vorrichtung und ein Verfahren zur Herstellung von Polymerfolien beschrieben, die mit Hilfe der beschriebenen Vorrichtung simultan längs und quer gestreckt werden können. Kondensatorfolien, hergestellt nach einem solchen Verfahren, sind in **US-A-5,429,785** beschrieben. Über das Schrumpfverhalten der Folien sind in dieser Schrift keine Angaben gemacht. Besonders niedrige Schrumpfwerte sind jedoch unwahrscheinlich, da die dort beschriebenen Folien nicht relaxiert werden.

Aufgabe der vorliegenden Erfindung war es daher, Folien mit geeigneten Schrumpfwerten und insbesondere ein geeignetes Verfahren zur Herstellung solcher Folien zur Verfügung zu stellen.

Diese beschriebene, erfindungsgemäße Aufgabe wird gelöst durch ein Verfahren zur Herstellung einer biaxial orientierten Folie mit einer Dicke <10 μm, welches dadurch gekennzeichnet ist, daß eine aufgeschmolzene Polymerschmelze auf eine Kühlwalze extrudiert, in Längs- und in Querrichtung gestreckt und in Längsrichtung um > 0.1 % und in Querrichtung um > 3 % relaxiert wird, wobei die Folie während der Längs- und Querrelaxation an den Rändern gehalten wird.

Die Aufgabe wird weiterhin gelöst durch eine biaxial orientierte Folie mit einer Dicke von < 10 μm, die folgende Eigenschaften aufweist:

$$S_{200} \, (TD) < 1{,}5 \, \% \text{ und} > -0{,}5$$

$$S_{200} \text{ (MD)} < 2{,}8 \ \% \text{ und} > -0{,}5$$

Bei dem erfindungsgemäßem Verfahren geht man von einem Polymerrohstoff, insbesondere einem Polyesterrohstoff aus. Unter Polyesterrohstoffen werden Zusammensetzungen verstanden, die zum überwiegenden Teil, d.h. zu mindestens 80 Gew.-%, bevorzugt mindestens 90 Gew.-%, aus einem Polymer, ausgewählt aus der Gruppe Polyethylenterephthalat (PET), Polyethylennaphthalt (PEN), Poly-1,4-dicyclohexandimethylenterephthalat (PCT), Polyethylennaphthalatbibenzoat (PENBB) und Blends dieser Polymere bestehen. Bevorzugt sind Polyesterrohstoffe, die vorzugsweise im wesentlichen aus Ethylenterephthalateinheiten und/oder vorzugsweise bis 30 Mol-% aus Comonomereinheiten aufgebaut sind, wobei eine Variation in der Glykol- und/oder der Säurekomponente der Comonomereinheiten möglich ist. Die Herstellung der Polyester kann sowohl nach dem Umesterungsverfahren mit den üblichen Katalysatoren, wie z.B. Zn-, Ca-, Li- und Mn-Salzen oder nach dem Direktveresterungsverfahren erfolgen.

Der Polyesterrohstoff enthält gegebenenfalls die zur Herstellung von Kondensatorfolien zur Verbesserung der Schlupf- und Gleiteigenschaften üblichen Additive (Partikel), z.B. anorganische Pigmente wie Kaolin, Talk, $SiO_2$ $MgCO_3$, $CaCO_3$, $BaCO_3$, $CaSO_4$, $BaSO_4$, $Li_3PO_4$, $Ca_3(PO_4)_2$, $Mg_3(PO)_2$, $TiO_2$, $Al_2O_3$, MgO, SiC, LiF oder die Ca-, Ba-, Mn-Salze der Terephthalsäure. Es können allerdings auch Teilchen auf Basis anderer organischer Polymeren wie z.B. Polystyrole, Polyacrylate, Polymethacrylate zugesetzt werden. Bevorzugt werden die Partikel in einer Konzentration von 0,005 bis 5,0 Gew.-%, besonders bevorzugt in einer Konzentration von 0,01 bis 2,0 Gew.-% (bezogen auf das Gewicht der Schicht) eingesetzt. Die durchschnittliche Teilchengröße beträgt 0,001 bis 10 μm, bevorzugt 0,005 bis 5 μm. Die Polyesterfolien können sowohl als Monofolien als auch als mehrschichtige, gegebenenfalls coextrudierte Folien mit gleich oder unterschiedlich ausgebildeten Oberflächen hergestellt werden, wobei eine Oberfläche beispielsweise pigmentiert ist, und die andere Oberfläche kein Pigment enthält. Es können eine oder beide Oberflächen der Folie nach bekannten Verfahren mit einer üblichen funktionalen Beschichtung versehen werden.

Bei den erfindungsgemäßen Verfahren zur Herstellung der Polymerfolie wird das aufgeschmolzene Polymer, insbesondere der Polyester, durch eine Schlitzdüse extrudiert und als weitgehend amorphe Vorfolie auf einer Kühlwalze abgeschreckt.

Die Folie wird anschließend erneut erhitzt und in Längs- und Querrichtung beziehungsweise Quer- und Längsrichtung beziehungsweise in Längs-/, in Quer- und nochmals in Längsrichtung und/oder Querrichtung gestreckt. Die Folie wird weiterhin - während sie an den Rändern gehalten wird - in Längs- und Querrichtung relaxiert. Die Relaxation in Längsrichtung wird dadurch realisiert, daß die Foliengeschwindigkeit beim Verlassen der Randhaltevorrichtung geringer ist als die maximale Geschwindigkeit der Folie in Längsrichtung innerhalb der Randhaltevorrichtung. Die Relaxation in Querrichtung erfolgt durch konvergente Führung der Randhaltevorrichtung. Eine bevorzugte Randhaltevorrichtung ist ein Simultanstreckrahmen, wie er beispielsweise in der **WO 88/0188** beschrieben ist. In diesem kann sowohl die Relaxation als auch die Streckung durchgeführt werden. Der Vorteil der Vorrichtung gemäß **WO 88/0188** besteht unter anderem darin, daß die Schrille Streckung (MD + TD), Relaxation und Fixierung aufgeteilt, ausgetauscht und in verschiedenen Zonen der Vorrichtung durchgeführt werden können. Die Strecktemperaturen liegen im allgemeinen bei $T_g$+10°C bis $T_g$+60°C, das Streckverhältnis der Längsstreckung liegt üblicherweise bei 2 bis 6, insbesondere bei 3 bis 4,5, das der Querstreckung bei 2 bis 5, insbesondere bei 3 bis 4,5 und das der gegebenenfalls durchgeführten zweiten Längsstreckung bei 1,1 bis 3. Die erste Längsstreckung kann gegebenenfalls gleichzeitig mit der Querstreckung (Simultanstreckung) durchgeführt werden. Die Thermofixierung der Folie erfolgt bei Ofentemperaturen von 200 °C bis 260 °C, insbesondere bei 220 bis 250 °C.

Die Relaxation - sowohl in Längs- wie in Querrichtung - erfolgt in der Randhaltevorrichtug bei Temperaturen zwischen $T_g$ + 10 °C bis 250 °C. Die Längsrelaxation beträgt mindestens 0.1 %, bevorzugt > 0.5 %, insbesondere > 0.7 %. Relaxationen > 6.0 % sind nicht mehr zweckmäßig. Die Querrelaxation beträgt mindestens 3 %, bevorzugt > 5 %. Querrelaxationen von > 15 % sind nicht mehr zweckmäßig.

Mittels des erfindungsgemäßen Verfahrens läßt sich ein Längsschrumpf der Folie bei 200 °C ($S_{200}$ MD) von< 4 %, bevorzugt < 3.3 %, besonders bevorzugt < 2.7 %, einstellen. Der erzielbare Querschrumpf bei 200 °C ($S_{200}$ TD) liegt bei < 2.0 %, bevorzugt < 1.0 %. Auf der anderen Seite der Skala läßt sich mit dem erfindungsgemäßen Verfahren ein Schrumpf bei 200 °C von > -0.5 %, bevorzugt > 0.0 %, insbesondere > 0.5 %, einstellen.

Die erfindungsgemäße Folie besitzt eine Dicke von < 10 μm, vorzugsweise ≤ 8 μm und insbesondere von ≤ 5 μm.

Der Querschrumpf der erfindungsgemäßen Folie bei 200 °C ist < 1.5 %, bevorzugt < 1.0 % und besonders bevorzugt < 0.8 %. Der minimale Schrumpf beträgt - 0.5, bevorzugt > 0.0 %. Der Längsschrumpf der erfindungsgemäßen Folie bei 200 °C ($S_{200}$) ist < 2.8 %, bevorzugt < 2.5 %, insbesondere < 2.3 %. Darüber hinaus hat es sich als zweckmäßig erwiesen, wenn der Längsschrumpf mindestens > - 0.5 %, bevorzugt > 0.0 %, insbesondere > 1.0 % ist.

Die erfindungsgemäßen Folien weisen eine überraschend geringe Dickenvariation über die Folienbreite von typischerweise weniger als 20 % auf Solch gleichmäßige Dickenprofile lassen sich mit off-line Relaxationsverfahren oder Verfahren, bei denen die Relaxation ungehalten erfolgt, nicht erreichen. Bei dem erfindungsgemäßen Verfahren wird die Dicke der Folie vor der Aufwicklung über deren gesamte Breite kontinuierlich gemessen. Mittels der erhaltenen Meßwerte wird die Spaltbreite der Extrusionsdüse so eingestellt, daß auftretenden Dick- und Dünnstellen entgegengewirkt wird.

Folien erhältlich nach dem erfindungsgemäßen Verfahren sowie die beschriebenen erfindungsgemäßen Folien eignen sich hervorragend zur Herstellung von SMD-Kondensatoren. Diese Kondensatoren werden nach allgemein üblichen, bekannten Verfahren hergestellt. Dabei werden üblicherweise die Folien zunächst metallisiert und geschnitten. Die erhaltenen metallisierten Folienstreifen werden dann übereinandergeschichtet. Diese Stapel, beziehungsweise Wickel, werden getempert, anschließend kontaktiert und auf entsprechende Größe zurechtgeschnitten.

**Patentansprüche**

1. Verfahren zur Herstellung einer biaxial orientierten Folie mit einer Dicke von < 10 µm, wobei eine Polymerschmelze durch den Spalt und Extrusionsdüse auf eine Kühlwalze extrudiert, in Längs- und Querrichtung gestreckt und in Längsrichtung um > 0.1 % und Querrichtung um > 3 % relaxiert wird, wobei die Folie während der Längs- und Querrelaxation an den Rändern gehalten wird und die Folie aufgewickelt wird.

2. Verfahren nach Anspruch 1, dadurch gekennzeichnet, daß die Relaxation in einem Simultantstreckrahmen durchgeführt wird.

3. Verfahren nach Anspruch 1 oder 2, dadurch gekennzeichnet, daß die Längs- und Querstreckung in einem Simultanstreckrahmen durchgeführt wird.

4. Verfahren nach einem oder mehreren der Ansprüche 1 bis 5, dadurch gekennzeichnet, daß die Längsrelaxation > 0.5 % und die Querrelaxation > 5 % ist.

5. Verfahren nach einem oder mehreren der Ansprüche 1 bis 4, dadurch gekennzeichnet, daß die Dickenvariationen über die Folienbreite < 20 % ist.

6. Verfahren nach einem oder mehreren der Ansprüche 1 bis 5, dadurch gekennzeichnet, daß die Dicke der Folie vor der Aufwicklung gemessen wird und der erhaltene Dickenmeßwert zur Regelung der Spaltbreite der Extrusionsdüse verwendet wird, um auftretenden Dick- und Dünnstellen der Folie entgegenzuwirken.

7. Biaxial orientierte Folie mit eine Dicke von < 10 µm und einem Querschrumpf bei 200 °C ($S_{200}$ TD) von < 1.5 % und > - 0.5 % und einem Längsschrumpf bei 200 °C ($S_{200}$ MD) von < 2.8 %.

8. Folie nach Anspruch 7, dadurch gekennzeichnet, daß der Längsschrumpf bei 200 °C ($S_{200}$ MD) > - 0.5 % ist.

9. Folie nach Anspruch 7 oder 8, dadurch gekennzeichnet, daß die Folie eine Dicke von < 5 µm aufweist.

10. Folie nach einem oder mehreren der Ansprüche 7 bis 9, dadurch gekennzeichnet, daß die Folie eine Dickenvariation über die Folienbreite von < 20 % aufweist.

11. Folie nach einem oder mehreren der Ansprüche 7 bis 10, dadurch gekennzeichnet, daß die Folie eine Polyesterfolie aus mindestens 80 Gew.-% Polyethylenterephthalat ist.

12. Verwendung einer Folie erhältlich nach einem Verfahren der Ansprüche 1 bis 6 zur Herstellung von SMD-Kondensatoren.

13. Verwendung einer Folie nach einem der Ansprüche 7 bis 11 zur Herstellung von SMD-Kondensatoren.

14. Kondensator enthaltend eine Folie, erhältlich nach einem Verfahren der Ansprüche 1 bis 6.

15. Kondensator enthaltend eine Folie nach einem der Ansprüche 7 bis 11.

16. Verwendung einer Folie mit einem MD-Schrumpf bei 200 °C von <3.3 % und einem TD-Schrumpf bei 200 °C von <2 % zur Herstellung von SMD-Kondensatoren.